# EUROPÄISCHE PATENTSCHRIFT

(11) **EP 1 232 921 B1**
(45) Veröffentlichungstag und Bekanntmachung des Hinweises auf die Patenterteilung: **21.07.2004**
(21) Anmeldenummer: 02075015.4
(22) Anmeldetag: 16.01.2002
(51) Int. Cl.: B60R 25/02

(54) **Verriegelungsvorrichtung**
Locking device
Système de verouillage

(30) Priorität: 24.01.2001 DE 10103182
(43) Veröffentlichungstag der Anmeldung: 21.08.2002
(73) Patentinhaber: Valeo Sicherheitssysteme GmbH, 85253 Erdweg (DE)
(72) Erfinder: Starken, Harald, 85253 Erdweg (DE)
(74) Vertreter: Hervouet, Sylvie

(56) Entgegenhaltungen:
- EP-A- 0 764 566
- DE-A- 19 906 268
- FR-A- 2 748 710

## Beschreibung

Die Erfindung betrifft eine Verriegelungsvorrichtung mit durch einen elektromechanischen Antrieb axial von einer Ent- in eine Verriegelungslage und umgekehrt verschiebbaren Sperrelement.

Derartige Verriegelungsvorrichtungen sind bekannt und werden vor allem zur elektrischen Verriegelung der Lenkspindel einer Lenkeinrichtung eines Kraftfahrzeuges verwendet. So offenbart beispielsweise die EP 0 764 566 A1 eine Verriegelungsvorrichtung, die einen in einem Gehäuse angeordneten Elektromotor mit nachgeschaltetem Spindelantrieb zur Verschiebung eines Sperrelementes von seiner Ver- in seine Entriegelungsstellung und umgekehrt umfaßt, wobei das Sperrelement in seiner Verriegelungsstellung in die durch benachbarte Zähne gebildete Ausnehmung eines an der Lenkspindel befestigten Zahnkranzes eingreift und damit die Lenkspindel blockiert.

Nachteilig ist bei dieser bekannten Vorrichtung unter anderem, daß bei einem mechanischen Defekt im Antriebsstrang (z.B. bei einem Abreißen der Spindel etc.) oder bei starken Vibrationen der Verriegelungsvorrichtung nicht ausgeschlossen ist, daß das Sperrelement auch während der Fahrt in seine Verriegelungsstellung verschoben wird.

Aus der deutschen Patentanmeldung DE 199 06 268 A1 ist bereits eine Verriegelungsvorrichtung bekannt, bei der das Sperrelement seitlich mit einer Ausnehmung versehen ist, in welche zu seiner Fixierung in der entriegelten Stellung ein als Hebel ausgebildetes Sicherungselement mittels einer vorgespannten Feder eingeschwenkt wird. Dabei ist das Sticherungselement um eine parallel zur Längsachse des Spindelantriebes angeordnete Achse verschwenkbar. Zum Herausschwenken des Sicherungselementes dient eine von dem triebsteil der Gewindespindel über einen Steuernocken angesteuerte Welle. Die Verwendung eines derartigen von der Gewindespindel angesteuerten Sicherungselementes bereitet indessen in der Praxis Probleme, wenn es sich bei dem Antrieb um einen Antrieb ohne Endanschläge (Antrieb mit Freilauf) handelt, wie er beispielsweise aus der DE 199 61 975 C1 bekannt ist, weil sich in diesem Fall die Steuerkontur zusammen mit dem Antriebsteil hinsichtlich ihrer axialen Lage verschiebt.

Der Erfindung liegt die Aufgabe zugrunde, eine kompakt aufgebaute Verriegelungsvorrichtung mit einem zur Fixierung des Sperrelementes verschwenkbaren oder verschiebbaren Sicherungselement anzugeben, das auch dann auf einfache Weise in seine Sperrstellung bzw. in seine Freigabestellung betätigbar ist, wenn als Antrieb für die lung bzw. in seine Freigabestellung betätigbar ist, wenn als Antrieb für die Verschiebung des Sperrelementes ein Antrieb mit Freilauf verwendet wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Der Erfindung liegt im wesentlichen der Gedanke zugrunde, einerseits an dem axial verschiebbaren Antriebsteil eine Steuerkontur vorzusehen, andererseits aber den Abstand zwischen Steuernocken und Sicherungselement derart zu wählen, daß in der Entriegelungslage des Sperrelementes der Steuernocken axial gegenüber der Steuerkontur verschoben ist und sich damit außerhalb des Einwirkungsbereiches der Steuerkontur befindet. Wird zur Verschiebung des Sperrelementes in seine Verriegelungslage der elektromechanische Antrieb aktiviert, bleibt zunächst das Sicherungselement in seiner Sperrstellung. Dadurch stützt sich das Sperrelement bzw. der Mitnehmer an dem Sicherungselement ab, und das triebsteil mit der Steuerkontur wird axial gegen den Druck einer Druckfeder in Richtung auf den Steuernocken verschoben, bis der Steuernocken in Eingriff mit der Steuerkontur gelangt. Durch die dann auf den Steuemocken wirkende Steuerkontur wird der Nocken und damit auch das Sicherungselement betätigt und das Sperrelement bzw. der Mitnehmer werden freigegeben, so daß die vorgespannte Feder die aus Antriebsteil, Mitnehmer und Sperrelement bestehende Anordnung schlagartig in die Verriegelungslage verschiebt.

Sofern das Sicherungselement (bei Verwendung eines Freilaufes) seine Position erst ändert, wenn die aus Antriebsteil, Mitnehmer und Sperrelement bestehende Anordnung vollständig in die Richtungen Verriegeln und Entriegeln verfahren ist, kann durch Abfrage der Stellung des Sicherungselementes durch nur einen Sensor ein Erkennen beider Endlagen der Anordnung erfo lgen.

Die Steuerkontur kann in axialer Richtung rampenförmig ausgebildet sein, derart, daß der Steuernocken durch die axiale Verschiebung des Antriebsteiles seine zur Freigabe des Sicherungselementes erforderliche Schwenkbewegung ausführt. Allerdings setzt dieses in der Regel eine relativ große axiale Hubbewegung des Antriebsteiles voraus. Um diese Hubbewegung geringer zu halten, hat es sich als vorteilhaft erwiesen, die Steuerkontur des Antriebsteiles derart auszubilden, daß der Steuernocken bei der nach oben gerichteten Verschiebung des Antriebsteiles sich auf einer schraubenförmigen, nach außen gerichteten Berührungsfläche an der Steuerkontur abstützt.

Das Sicherungselement kann sowohl als schwenkbarer Hebel als auch als linear geführter Bolzen ausgebildet sein, wobei die Verbindung zwischen dem jeweiligen Sicherungselement und dem Steuernocken auf unterschiedliche Weise realisierbar ist.

Weitere Einzelheiten und Vorteile der Erfindung ergeben sich aus den folgenden anhand von Figuren erläuterten Ausführungsbeispielen. Es zeigen:
Fig.1-4 vier schematische Darstellungen zur Erläuterung der Wirkungsweise der erfindungsgemäßen Verriegelungsvorrichtung;
Fig.5 und 6 vergrößerte Draufsichten auf die in Fig.1 und 3 dargestellten Ansichten der Verriegelungsvorrichtung, wobei die in den Fig.1 und 3 mit 14 bezeichnete Feder aus Übersichtlichkeitsgründen weggelassen wurde;
Fig.7 eine Explosionsdarstellung einer erfindungsgemäßen Verriegelungsvorrichtung und
Fig.8 und 9 zwei weitere Ausführungsbeispiele der Erfindung mit unterschiedlichen Anordnungen der Sicherungselemente.

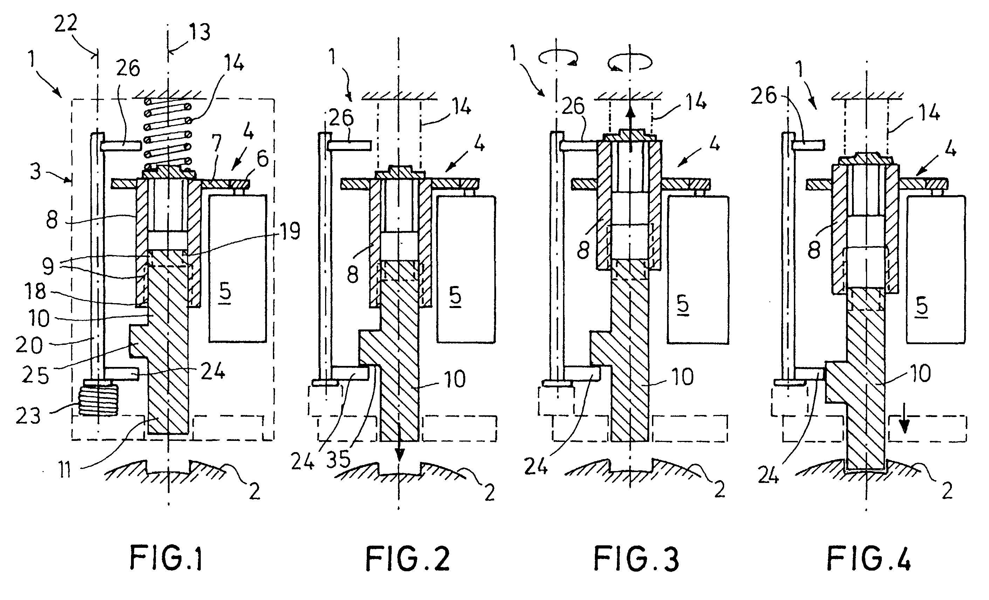

In den Fig.1-4 ist mit 1 eine Verriegelungsvorrichtung zur elektrischen Verriegelung einer (nicht dargestellten) Lenkspindel eines Kraftfahrzeuges und mit 2 ein mit der Lenkspindel drehfest verbundener Zahnkranz bezeichnet.

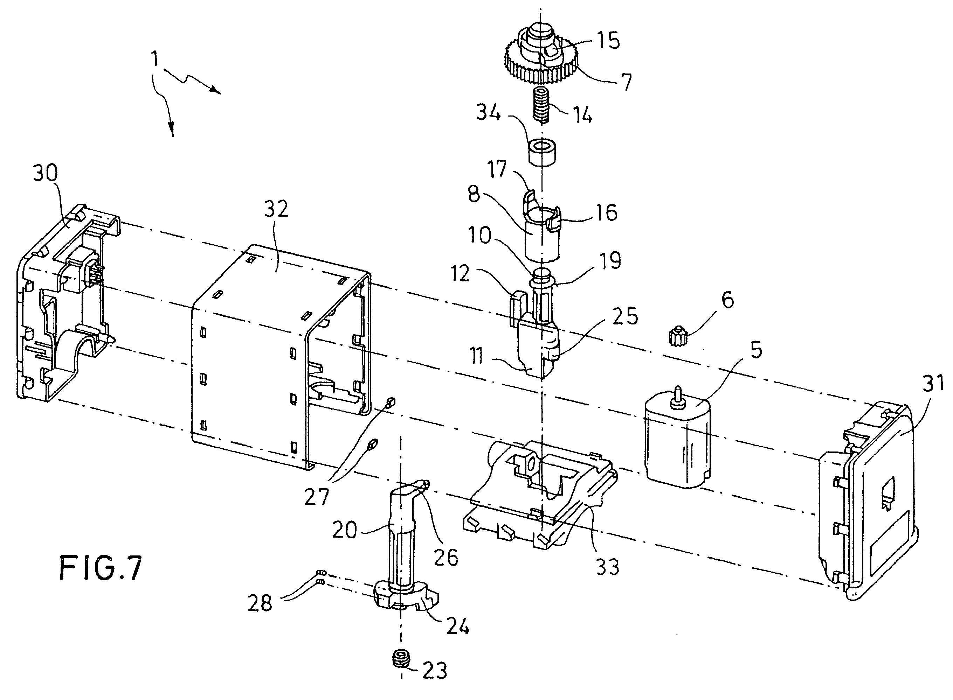

Die Verriegelungsvorrichtung 1 umfaßt ein in Fig.1 lediglich gestrichelt angedeutetes Gehäuse 3, in dem ein elektromechanischer Antrieb 4 mit einem Elektromotor 5 mit umkehrbarer Drehrichtung angeordnet ist. Der Elektromotor 5 wirkt über ein Ritzel 6 mit nachgeschaltetem Zahnrad 7 auf ein hülsenförmiges Antriebsteil 8, welches seinerseits über einen Gewindeantrieb 9 mit einem Mitnehmer 10 verbunden ist. Der dem Antriebsteil 8 abgewandte Endbereich des Mitnehmers 10 ist als Sperrelement 11 ausgebildet. Der Mitnehmer 10 wird axial in einer gehäusefesten Führung 12 (Fig. 7) geführt, so daß sich der Mitne h-mer 10 nicht um seine Längsachse 13 drehen kann.

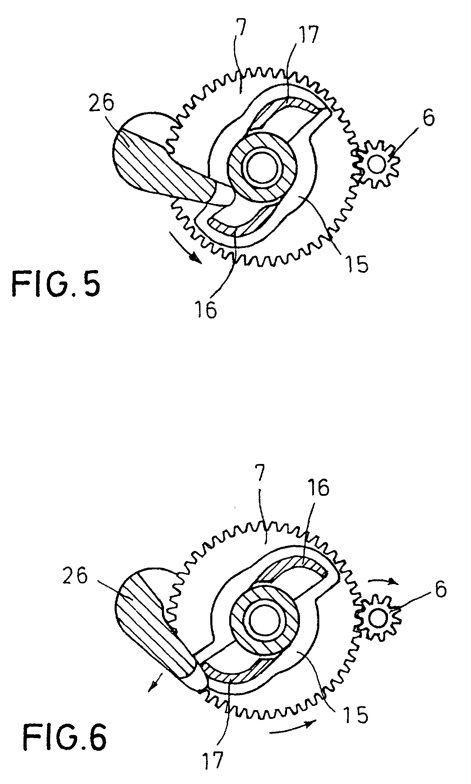

Das Antriebsteil 8 ist axial gegen den Druck einer sich an dem Gehäuse 3 abstützenden Druckfeder 14 verschiebbar angeordnet und ist durch eine Ausnehmung 15 des (hinsichtlich seiner axialen Lage gehäusefesten) Zahnrades 7 hindurchgeführt (Fig.5). Die Ausnehmung 15 besitzt eine Randkontur, in die eine entsprechende, zwei schaufelförmige Segmente 16, 17 bildende Kontur des entsprechenden Teilbereiches des Antriebsteiles 8 formschlüssig eingreift, so daß das Antriebsteil 8 drehfest mit dem Zahnrad 7 verbunden ist.

Der aus einem Innengewinde 18 des Antriebsteiles 8 und einem Gewindesegment 19 des Mitnehmers bestehende Gewindeantrieb 9 ist als Freilauf ausgebildet, wobei es sich als vorteilhaft erwiesen hat, wenn der in der eingangs erwähnten Druckschrift DE 199 61 975 C1 beschriebene Steuerstift durch ein feststehendes Gewindesegment 19 ersetzt wird, so daß die ansonsten erforderlichen Steuerkonturen an den Gewindeausläufen des Antriebsteiles entfallen können. Dabei ist die Strecke, um die der Mitnehmer 10 bzw. das Antriebsteil 8 zurückfallen, durch eine verringerte Gewindesteigung (z.B. 1,5 mm gegenüber 6 mm im Hauptgewinde des Antriebsteiles) der jeweils letzten Windung minimiert. Die entsprechende Geometrie des feststehenden Gewindesegmentes am Mitnehmer 10 entsteht vorzugsweise durch Verschneidung der Gewinde mit den unterschiedlichen Steigungen, so daß in beiden Gewindebereichen Flächenberührung besteht. Die Kontur dieses Gewindesegmentes ist daher rautenförmig ausgebildet.

Die Verriegelungsvorrichtung 1 umfaßt ferner ein an einer Welle 20 drehfest angeordnetes und um eine zur Längsachse 13 des Mitnehmers 10 parallele Achse 22 schwenkbares, durch eine Drehfeder 23 vorgespanntes hebelförmiges Sicherungselement (Sicherungshebel) 24, das zur Sicherung des Sperrelementes 11 in der Entriegelungslage (Fig.1) durch die Drehfeder 23 unter einen Vorsprung 25 des Mitnehmers 10 gedrückt wird. An der Welle 20 ist ferner ein Steuernocken 26 befestigt, der von dem Sicherungshebel 24 einen Abstand aufweist, welcher derart gewählt ist, daß in der Entriegelungslage des Sperrelementes 11 der Steuernocken 26 sich oberhalb der an dem Antriebsteil 8 durch die schaufelförmigen Segmente 16, 17 gebildeten Steuerkontur befindet.

Nachfolgend wird näher auf die Wirkungsweise der Erfindung eingegangen. Dabei soll sich das Sperrelement 11 zunächst in der in den Fig.1 und 5 dargestellten Entriegelungslage befinden, bei welcher der Sicherungshebel 24 sich in seiner Sicherungsposition befindet und eine axiale Bewegung des Mitnehmers 10 in Richtung auf den Zahnkranz 2 blockiert.

Wird nun zur Verschiebung des Sperrelementes 11 in seine Verriegelungslage der elektromechanische Antrieb 4 aktiviert, so wird über das Zahnrad 7 das Antriebsteil 8 gedreht, und das Gewindesegment 19 des Mitnehmers 10 gelangt in das Innengewinde 18 des triebsteiles 8, so daß der Mitnehmer 10 in Richtung auf den Zahnkranz 2 verschoben wird, bis der Vorsprung 25 des Mitnehmers 10 gegen den Sicherungshebel 24 stößt (Fig.2).

Da eine weitere Verschiebung des Mitnehmers 10 und damit auch des Sperrelementes 11 nicht möglich ist, wird bei weiterer Drehung des Antriebsteiles 8 dieses gegen den Druck der Druckfeder 14 nach oben verschoben, bis das Gewindesegment 19 das Ende des Innengewindes 18 des Antriebsteiles 8 erreicht hat und der Steuernocken 26 in die durch die die Segmente 16, 17 gebildete Steuerkontur eingreift (Fig.3 und 6). Durch die nach außen verlaufende schaufelförmige Steuerkontur 16, 17 des Antriebsteiles 8 wird der Steuernocken 26 und über die Welle 20 auch der Sicherungshebel 24 in seine Freigabestellung verschwenkt, so daß das Antriebsteil 8 zusammen mit dem Mitnehmer 10 und dem Sperrelement 11 durch die Druckfeder 14 axial in die Verriegelungslage verschoben werden (Fig.4). Gleichzeitig wird über einen die Lage des Sicherungshebels 24 detektierenden ersten Sensor der Elektromotor 5 abgeschaltet.

Zum Verschieben des Sperrelementes 11 in seine Entriegelungslage wird wiederum der elektromechanische Antrieb 4 aktiviert. Dabei ändert sich die Drehrichtung des Elektromotors 5. Das Gewindesegment 19 des Mitnehmers 10 gelangt wiederum in das Innengewinde 18 des Antriebsteiles 8 und der Mitnehmer 10 wird nach oben verschoben, bis der Sicherungshebel 24 aufgrund der vorgespannten Drehfeder 23 unter den Vorsprung 25 schwenkt wird und der Elektromotor 5 mit Hilfe des die Lage des Sicherungshebels 24 detektierenden zweiten Sensors abgeschaltet (Fig.1).

Die jeweilige Lageerkennung des Sicherungshebels 24 kann beispielsweise mit Hilfe von Magnetfeldsensoren (Hallsensoren) 27 (Fig.7) erfolgen, wobei entsprechende Magnete 28 an dem Sicherungshebel 24 angeordnet sind.

In Fig.7 ist die Explosionsdarstellung einer erfindungsgemäßen Verriegelungsvorrichtung 1' wiedergegeben, wobei gleiche Funktionselemente wie in dem vorstehend beschriebenen Ausführungsbeispiel mit den gleichen Bezugszeichen versehen sind. Das Gehäuse 3 besteht aus den Seitenteilen 30, 31, dem Deckel 32 und dem Unterteil 33. In das Antriebsteil 8 ist eine Druckplatte 34 einlegbar, an der sich die Druckfeder 14 abstützt. Dabei erfolgt die gehäusefeste Abstützung dieser Druckfeder 14 allerdings nicht direkt an dem Deckel 32, sondern an dem Zahnrad 7, welches hinsichtlich seiner axialen Lage ebenfalls gehäusefest angeordnet ist.

Die Erfindung ist selbstverständlich nicht auf die vorstehend beschriebenen Ausführungsbeispiele beschränkt. So brauchen beispielsweise der Mitnehmer und das Sperrelement nicht einteilig ausgestaltet sein, sondern der Mitnehmer kann mit einer Aufnahme versehen sein, in welche das Sperrelement mit seinem einen Ende eingreift, wie dieses beispielsweise in der DE 199 06 268 A1 offenbart ist. Bei dem Gewindeantrieb muß es sich nicht zwingend um einen Freilaufantrieb handeln, sofern die Endlagen des Sperrelementes etc. durch entsprechende Sensoren ermittelt werden, welche dann ihrerseits ein Abschalten des Elektromotors bewirken.

Ferner kann der Mitnehmer oder das Sperrelement statt mit einem Vorsprung zum Hintergreifen des Sperrhebels mit einer nutenförmigen Ausnehmung versehen sein.

Außerdem kann die Steuerkontur des Antriebsteiles in axialer Richtung z.B. auch rampenförmig ausgebildet sein, so daß der Steuernocken allein durch die axiale Verschiebung des Antriebsteiles seine zur Freigabe des Sicherungshebels erforderliche Schwenkbewegung ausführt. Die Steuerkontur in Umfangsrichtung muß nicht zwingend schaufelförmig ausgebildet sein, sondern kann auch eine andere, den Steuernocken nach außen bewegende Kontur besitzen.

Im übrigen ist es auch nicht zwingend erforderlich, daß der Steuernocken zur Freigabe des Mitnehmers oberhalb des Zahnrades in die Steuerkontur eingreift. Vielmehr können die Lage des Steuernockens und der Steuerkontur auch derart gewählt werden, daß sich der Steuernocken an der Steuerkontur in einem Bereich unterhalb des Zahnrades abstützt.

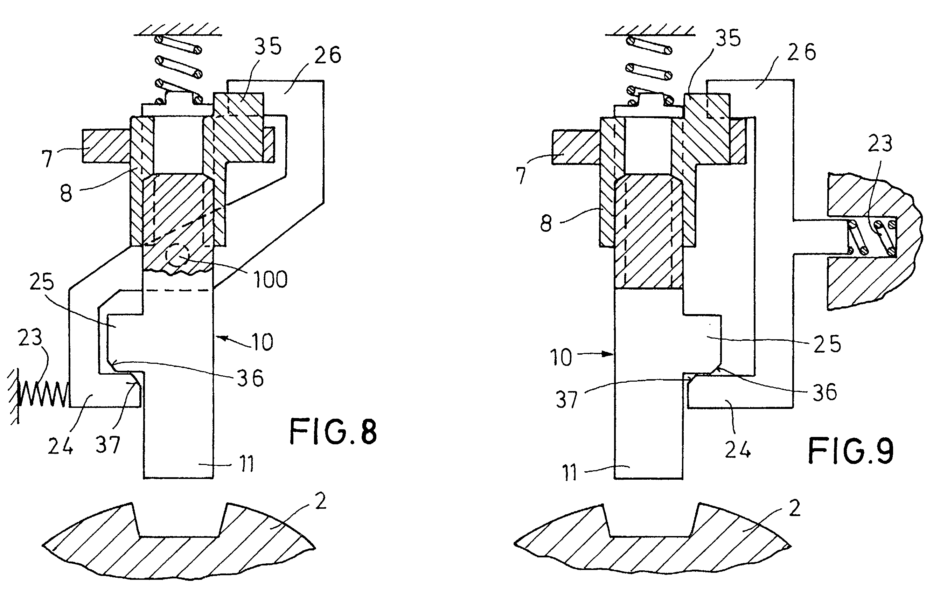

Schließlich kann statt der Befestigung des Sicherungselementes und des Steuernockens an einer Welle, die um eine zur Längsachse des Mitnehmers parallele Achse schwenkbar ist, auch eine andere schwenkbare Anordnung von Sicherungselement und Steuernocken vorgesehen werden. Ferner kann das Sicherungselement auch als radial verschiebbarer Bolzen ausgebildet sein. In den Fig.8 und 9 sind entsprechende Ausführungsbeispiele dargestellt, wobei wiederum gleiche Funktionselemente wie in den vorstehend beschriebenen Ausführungsbeispielen mit den gleichen Bezugszeichen versehen sind. In beiden Fig. ist der Steuernocken 26 axial so weit verschoben, daß er die Steuerkontur des Antriebsteiles 8 gerade erreicht hat.

Fig.8 gibt ein Ausführungsbeispiel wieder, bei dem der Sicherungshebel 24 und der Steuernocken 26 jeweils an den Enden eines zweiarmigen Hebels angeordnet sind, der um eine z. B. in der Hebelmitte liegende Achse 100 verschwenkbar ist. Dreht sich das Antriebsteil 8 weiter, nachdem der Steuernocken die Steuerkontur erreicht hat, so wird der Steuermcken 26 aufgrund der mit 35 bezeichneten Steuerkontur des Antriebsteiles 8 nach außen geführt, so daß sich auch das Sicherungselement 24 gegen den Druck der Feder 23 radial nach außen bewegt. Durch die Wahl der Längen der beiden Hebelarme kann die durch die Steuerkontur 35 des Antriebsteiles 8 erzielte Auslenkung des Steuernockens 26 an die zur Freigabe des Mitnehmers 10 erforderliche Auslenkung des Sicherungselementes 24 angepaßt werden.

Fig.9 zeigt ein Ausführungsbeispiel, bei dem durch die Bewegung des Steuernockens 26 nach außen auch das Sicherungselement 24 gegen den Druck der Feder 23 (z.B. in einer linearen Führung) radial nach außen gedrückt wird.

Bei den in den Fig.8 und 9 dargestellten Ausführungsbeispielen weisen die einander zugewandten Berührungsflächen des Sicherungselementes 24 und des Vorsprunges 25 des Mitnehmers 10 im jeweils vorderen Bereich schräge Flächen 36, 37 auf, um den Schwenkwinkel bzw. die Verschiebung des Sicherungselementes 24 über das durch die Steuerkontur 35 bewirkte Maß hinaus zu vergrößern. Die Steuerkontur 35 verschwenkt bzw. verschiebt das Sicherungselement 24 so weit, daß sich die schrägen Flächen 36, 37 berühren, so daß das Sicherungselement 24 am Mitnehmer 10 abgeleitet und weiter ausgeschwenkt wird. In der gesicherten Position stehen sich hingegen ebene Flächen gegenüber, so daß eine ungewollte Bewegung des Mitnehmers 10 (z.B. bei Bruch des Gewindes) zuverlässig verhindert wird.

### Bezugszeichenliste

- 1,1': Verriegelungsvorrichtung
- 2: Zahnkranz
- 3: Gehäuse
- 4: elektromechanischer Antrieb
- 5: Elektromotor
- 6: Ritzel
- 7: Zahnrad
- 8: Antriebsteil
- 9: Gewindeantrieb
- 10: Mitnehmer
- 11: Sperrelement
- 12: Führung
- 13: Längsachse (Mitnehmer)
- 14: Druckfeder
- 15: Ausnehmung
- 16,17: schaufelförmige Segmente, Steuerkonturen
- 18: Innengewinde
- 19: Außengewinde, Gewindesegment
- 20: Welle

- 22: Achse
- 23: Drehfeder, Feder
- 24: Sicherungselement, Sicherungshebel
- 25: Vorsprung
- 26: Steuernocken
- 27: Magnetfeldsensor
- 28: Magnet

- 30,31: Seitenteile
- 32: Deckel
- 33: Unterteil
- 34: Druckplatte
- 35: Steuerkontur
- 36,37: schräge Flächen
- 100: Achse

## Patentansprüche

1. Verriegelungsvorrichtung mit einem durch einen elektromechanischen Antrieb (4) axial von einer Ent- in eine Verrriegelungslage und umgekehrt verschiebbaren Sperrelement (11), mit den Merkmalen:
a) die Verriegelungsvorrichtung (1;1') umfaßt ein Gehäuse (3), in dem ein durch den elektromechanischen Antrieb (4) drehbares Antriebsteil (8) und ein mit dem Sperrelement (11) verbundener axial geführter Mitnehmer (10) angeordnet sind, wobei der Mitnehmer (10) und das Antriebsteil (8) über einen Gewindeantrieb (9) miteinander verbunden sind;
b) das Antriebsteil (8) ist axial gegen den Druck einer sich an dem Gehäuse (3) abstützenden Druckfeder (14) verschiebbar und weist an seinem äußeren Umfang eine Steuerkontur (16,17) auf;
c) die Verriegelungsvorrichtung (1;1') umfaßt ein durch eine Feder (23) vorgespanntes Sicherungselement (24), das zur Sicherung des Sperrelementes (11) in der Entriegelungslage mittels der Feder (23) in eine seitliche Ausnehmung oder unter einen Vorsprung (25) des Mitnehmers (10) oder des Sperrelementes (11) drückbar ist;
d) das Sicherungselement (24) ist mit einem Steuernocken (26) verbunden, der von dem Sicherungselement (24) einen Abstand aufweist, welcher derart gewählt ist, daß in der Entriegelungslage des Sperrelementes (11) der Steuernocken (26) sich außerhalb des Einwirkungsbereiches der an dem Antriebsteil (8) angeordneten Steuerkontur (16,17) befindet und
e) der Mitnehmer (10), das Antriebselement (8) und der Gewindeantrieb (9) sind derart ausgestaltet und die Lage der Steuerkontur (16,17) an dem Antriebsteil (8) ist derart gewählt, daß nach Aktivierung des elektromechanischen Antriebes (4) zur Verschiebung des Sperrelementes (11) in seine Verriegelungslage das Antriebsteil (8) -bei Abstützung des Mitnehmers (10) an dem Sicherungselement (24)- axial so lange gegen den Druck der Druckfeder (14) in Richtung auf den Steuernocken (26) verschiebbar ist, bis der Steuernocken (26) in Eingriff mit der Steuerkontur (16,17) gelangt und das Sicherungselement (24) durch Verschwenken des Steuernockens (26) aus der Sicherungsstellung herausbewegt wird, so daß das Antriebsteil (8) zusammen mit dem Mitnehmer (10) und dem Sperrelement (11) durch die Druckfeder (14) axial in die Verriegelungslage verschoben wird.

2. Verriegelungsvorrichtung nach Anspruch 1, **dadurch gekennzeichnet, daß** es sich bei dem Antriebsteil (8) um ein mindestens in einem Teilbereich hülsenförmig ausgebildetes Element mit Innengewinde (18) und bei dem Mitnehmer (10) um ein in einer gehäusefesten Führung (12) axial verschiebbar gelagertes Teil handelt, welches auf seiner dem Antriebsteil (8) zugewandten Seite mit einem Außengewinde (19) versehen ist, welches mit dem Innengewinde (18) des Antriebsteiles (8) den Gewindeantrieb (9) bildet.

3. Verriegelungsvorrichtung nach Anspruch 1 oder 2, **dadurch gekennzeichnet, daß** der elektromechanische Antrieb (4) einen Elektromotor (5) umfaßt, der über ein Ritzel (6) auf ein Zahnrad (7) wirkt, daß das Zahnrad (7) eine Ausnehmung (15) aufweist, durch die ein dem Mitnehmer (10) abgewandter Teilbereich des Antriebsteiles (8) axial verschiebbar hindurchführbar ist und daß die Ausnehmung (15) eine Randkontur besitzt, die in eine entsprechende Kontur des Teilbereiches des Antriebsteiles (8) formschlüssig eingreift, so daß das Antriebsteil (8) drehfest mit dem Zahnrad (7) verbunden ist.

4. Verriegelungsvorrichtung nach Anspruch 3, **dadurch gekennzeichnet, daß** der Teilbereich des Antriebsteiles (8) zwei gegenüberliegende schaufelförmig ausgebildete Segmente (16,17) umfaßt.

5. Verriegelungsvorrichtung nach Anspruch 4, **dadurch gekennzeichnet, daß** die schaufelförmigen Segmente (16,17) derart ausgebildet sind, daß sie die Steuerkontur des triebsteiles (8) bilden.

6. Verriegelungsvorrichtung nach einem der Ansprüche 1 bis 5, **dadurch gekennzeichnet, daß** der Mitnehmer (10) zur Sicherung des Sperrelementes (11) in seiner Entriegelungslage einen Vorsprung (25) umfaßt.

7. Verriegelungsvorrichtung nach einem der Ansprüche 1 bis 6, **dadurch gekennzeichnet, daß** die Steuerkontur (16,17) des Antriebsteiles (8) derart ausgebildet ist, daß der Steuernocken (26) bei der nach oben gerichteten Verschiebung des Antriebsteiles (8) sich auf einer schraubenförmigen, nach außen gerichteten Berührungsfläche an der Steuerkontur (16,17) abstützt.

8. Verriegelungsvorrichtung nach einem der Ansprüche 1 bis 6, **dadurch gekennzeichnet, daß** die Steuerkontur des Antriebsteiles (8) in axialer Richtung rampenförmig ausgebildet ist, derart, daß der Steuernocken (26) allein durch die axiale Verschiebung des Antriebsteiles (8) seine zur Freigabe des Sicherungselementes (24) erforderliche Schwenkbewegung ausführt.

9. Verriegelungsvorrichtung nach einem der Ansprüche 1 bis 7, **dadurch gekennzeichnet, daß** der Gewindeantrieb (9) als Freilauf ausgebildet ist.

10. Verriegelungsvorrichtung nach einem der Ansprüche 1 bis 9, **dadurch gekennzeichnet, daß** in dem Gehäuse (3) der Vorrichtung (1') zur Überwachung der Lage des cherungselementes (24) mindestens ein Sensor (27) angeordnet ist.

11. Verriegelungsvorrichtung nach einem der Ansprüche 1 bis 10, **dadurch gekennzeichnet, daß** es sich bei dem Sicherungselement (24) um einen an einer Welle (20) drehfest angeordneten und um eine zur Längsachse (13) des Mitnehmers (10) parallele Achse (22) schwenkbaren Sicherungshebel handelt.

12. Verriegelungsvorrichtung nach einem der Ansprüche 1 bis 10, **dadurch gekennzeichnet, daß** das Sicherungselement (24) und der Steuernocken (26) jeweils an den Enden eines zweiarmigen Hebels angeordnet sind, der um eine senkrecht zur Längsachse (13) des Mitnehmers (10) verlaufende Achse (100) verschwenkbar ist.

13. Verriegelungsvorrichtung nach einem der Ansprüche 1 bis 10, **dadurch gekennzeichnet, daß** das Sicherungselement (24) radial nach außen verschiebbar angeordnet ist.

## Claims

1. Locking device with a detent element (11) axially displaceable by means of an electromechanical drive (4) from an unlocking position into a locking position, and vice versa, having the features:
a) the locking device (1; 1') comprises a housing (3), in which are arranged a drive part (8) rotatable by means of the electromechanical drive (4) and an axially guided driver (10) connected to the detent element (11), the driver (10) and the drive part (8) being connected to one another via a threaded drive (9);
b) the drive part (8) is axially displaceable counter to the pressure of a compression spring (14) supported on the housing (3) and on its outer circumference has a control contour (16, 17);
c) the locking device (1; 1') comprises a securing element (24) which is prestressed by a spring (23) and which, to secure the detent element (11) in the unlocking position, can be pressed by means of the spring (23) into a lateral recess or under a projection (25) of the driver (10) or of the detent element (11);
d) the securing element (24) is connected to a control cam (26) which is at a distance from the securing element (24) which is selected in such a way that, with the detent element (11) in the unlocking position, the control cam (26) is located outside the range of action of the control contour (16, 17) arranged on the drive part (8), and
e) the driver (10), the drive element (8) and the threaded drive (9) are designed in such a way and the position of the control contour (16, 17) on the drive part (8) is selected in such a way that, after the electromechanical drive (4) is activated in order to displace the detent element (11) into its locking position, with the driver (10) supported on the securing element (24), the drive part (8) is axially displaceable, counter to the pressure of the compression spring (14), in the direction of the control cam (26), until the control cam (26) comes into engagement with the control contour (16, 17), and, as a result of the pivoting of the control cam (26), the securing element (24) is moved out of the securing position, so that the drive part (8), together with the driver (10) and with the detent element (11), is displaced axially into the locking position by the compression spring (14).

2. Locking device according to claim 1, **characterized in that** the drive part (8) is an element of sleeve-shaped design at least in a part region, with an internal thread (18), and the driver (10) is a part which is mounted axially displaceably in a guide (12) fixed relative to the housing and which is provided, on its side facing the drive part (8), with an external thread (19) which, with the internal thread (18) of the drive part (8), forms the threaded drive (9).

3. Locking device according to claim 1 or 2, **characterized in that** the electromechanical drive (4) comprises an electric motor (5) which acts on a gearwheel (7) via a pinion (6), **in that** the gearwheel (7) has a recess (15), through which a part region, facing away from the driver (10), of the drive part (8) can be guided axially displaceably, and **in that** the recess (15) possesses an edge contour which engages positively into a corresponding contour of the part region of the drive part (8), so that the drive part (8) is connected fixedly in terms of rotation to the gearwheel (7).

4. Locking device according to claim 3, **characterized in that** the part region of the drive part (8) comprises two segments (16, 17) of blade-shaped design which are located opposite one another.

5. Locking device according to claim 4, **characterized in that** the blade-shaped segments (16, 17) are designed in such a way that they form the control contour of the drive part (8).

6. Locking device according to one of claims 1 to 5, **characterized in that** the driver (10) comprises a projection (25) for securing the detent element (11) in its unlocking position.

7. Locking device according to one of claims 1 to 6, **characterized in that** the control contour (16, 17) of the drive part (8) is designed in such a way that, during the upwardly directed displacement of the drive part (8), the control cam (26) is supported on a helical outwardly directed contact surface on the control contour (16, 17).

8. Locking device according to one of claims 1 to 6, **characterized in that** the control contour of the drive part (8) is of ramp-shaped design in the axial direction in such a way that the control cam (26) executes its pivoting movement, necessary for releasing the securing element (24), solely as a result of the axial displacement of the drive part (8).

9. Locking device according to one of claims 1 to 7, **characterized in that** the threaded drive (9) is designed as a freewheel.

10. Locking device according to one of claims 1 to 9, **characterized in that** at least one sensor (27) is arranged in the housing (3) of the device (1') in order to monitor the position of the securing element (24).

11. Locking device according to one of claims 1 to 10, **characterized in that** the securing element (24) is a securing lever arranged on a shaft (20) fixedly in terms of rotation and is pivotable about an axis (22) parallel to the longitudinal axis (13) of the driver (10).

12. Locking device according to one of claims 1 to 10, **characterized in that** the securing element (24) and the control cam (26) are arranged in each case at the ends of a two-armed lever which is pivotable about an axis (100) running perpendicular to the longitudinal axis (13) of the driver (10).

13. Locking device according to one of claims 1 to 10, **characterized in that** the securing element (24) is arranged so as to be displaceable radially outward.

## Revendications

1. Dispositif de verrouillage avec un élément de blocage (11) déplaçable dans le sens axial par un entraînement électromécanique (4) pour passer d'une position de déverrouillage à une position de verrouillage et vice versa, ayant les caractéristiques suivantes :
a) le dispositif de verrouillage (1, 1') comprend un boîtier (3) dans lequel sont disposés une pièce d'entraînement (8) pouvant tourner sous l'effet de l'entraînement électromécanique (4) et un toc d'entraînement (10) guidé dans le sens axial et relié à l'élément de blocage (11), le toc d'entraînement (10) et la pièce d'entraînement (8) étant reliés l'un à l'autre par un mécanisme à filetage (9) ;
b) la pièce d'entraînement (8) est déplaçable dans le sens axial contre la pression d'un ressort à compression (14) qui s'appuie sur le boîtier (3) et présente sur sa circonférence extérieure un contour de commande (16, 17) ;
c) le dispositif de verrouillage (1, 1') comprend un élément d'arrêt (24) prétendu par un ressort (23) et pouvant être comprimé pour arrêter l'élément de blocage (11) dans la position de déverrouillage au moyen du ressort (23) dans une cavité latérale ou sous une saillie (25) du toc d'entraînement (10) ou de l'élément de blocage (11) ;
d) l'élément d'arrêt (24) est relié à une came de commande (26) qui présente avec l'élément d'arrêt (24) une distance choisie de telle façon que dans la position de déverrouillage de l'élément de blocage (11), la came de commande (26) se trouve hors de la zone d'action du contour de commande (16, 17) disposée sur la pièce d'entraînement (8) et
e) le toc d'entraînement (10), l'élément d'entraînement (8) et le mécanisme à filetage (9) sont conçus de façon telle et la position du contour de commande (16, 17) sur l'élément d'entraînement (8) est choisie de façon telle qu'après activation de l'entraînement électromécanique (4) en vue de déplacer l'élément de blocage (11) dans sa position de verrouillage, la pièce d'entraînement (8), si le toc d'entraînement (10) s'appuie sur l'élément d'arrêt (24), peut être déplacée dans le sens axial vers la came de commande (26) contre la pression du ressort à compression (14), suffisamment longtemps pour que la came de commande (26) entre en prise avec le contour de commande (16, 17) et que l'élément d'arrêt (24) soit sorti de la position d'arrêt par pivotement de la came de commande (26), de façon telle que la pièce d'entraînement (8) se déplace dans le sens axial dans la position de verrouillage en même temps que le toc d'entraînement (10) et l'élément de blocage (11 ) sous l'effet du ressort à compression (14).

2. Dispositif de verrouillage selon la revendication 1, **caractérisé en ce que** la pièce d'entraînement (8) est au moins un élément doté d'un filetage intérieur (18) et ayant la forme d'une douille au moins dans une zone partielle et **en ce que** le toc d'entraînement (10) est une pièce logée dans un guidage (12) solidaire du boîtier et mobile dans le sens axial, dotée sur le côté tourné vers la pièce d'entraînement (8), d'un filetage extérieur (19) qui forme avec le filetage intérieur (18) de la pièce d'entraînement (8) le mécanisme à filetage (9).

3. Dispositif de verrouillage selon les revendications 1 ou 2, **caractérisé en ce que** l'entraînement électromécanique (4) comprend un moteur électrique (5) qui agit sur une roue dentée (7) via un pignon (6), **en ce que** la roue dentée (7) présente une cavité (15) à travers laquelle une zone partielle de la pièce d'entraînement (8) située à l'opposé du toc d'entraînement (10) peut être introduite dans le sens axial en restant mobile et **en ce que** la cavité (15) présente un contour de bordure qui se met en prise sans glissement dans un contour correspondant de la zone partielle de la pièce d'entraînement (8) de façon à relier la pièce d'entraînement (8) avec la roue dentée sans rotation.

4. Dispositif de verrouillage selon la revendication 3, **caractérisé en ce que** la zone partielle de la pièce d'entraînement (8) comprend deux segments (16, 17) ayant la forme de pales opposées.

5. Dispositif de verrouillage selon la revendication 4, **caractérisé en ce que** les segments en forme de pales (16, 17) sont conçus de façon à former le contour de commande de la pièce d'entraînement (8).

6. Dispositif de verrouillage selon les revendications 1 à 5, **caractérisé en ce que** le toc d'entraînement (10) comprend une saillie (25) pour arrêter l'élément de blocage (11) dans sa position de déverrouillage.

7. Dispositif de verrouillage selon les revendications 1 à 6, **caractérisé en ce que** le contour de commande (16, 17) de la pièce d'entraînement (8) présente une forme telle que la came de commande (26), lors du déplacement vers le haut de la pièce d'entraînement (8) s'appuie sur une surface de contact du contour de commande (16, 17), laquelle surface a une forme hélicoïdale et est dirigée vers l'extérieur.

8. Dispositif de verrouillage selon les revendications 1 à 6, **caractérisé en ce que** le contour de commande de la pièce d'entraînement (8) a une forme de rampe dans le sens axial, de façon telle que la came de commande (26) exécute son mouvement de pivotement nécessaire pour libérer l'élément d'arrêt (24), uniquement à cause du déplacement axial de la pièce d'entraînement (8).

9. Dispositif de verrouillage selon l'une des revendications 1 à 7, **caractérisé en ce que** le mécanisme à filetage (9) est du type à roue libre.

10. Dispositif de verrouillage selon l'une des revendications 1 à 9, **caractérisé en ce qu'**au moins un capteur (27) est positionné pour surveiller la position de l'élément d'arrêt (24) dans le boîtier (3) du dispositif (1').

11. Dispositif de verrouillage selon l'une des revendications 1 à 10, **caractérisé en ce que** l'élément d'arrêt (24) est un levier d'arrêt disposé sur un arbre (20) sans pouvoir tourner et pouvant pivoter autour d'un axe parallèle (22) parallèle à l'axe longitudinal (13) du toc d'entraînement (10).

12. Dispositif de verrouillage selon l'une des revendications 1 à 10, **caractérisé en ce que** l'élément d'arrêt (24) et la came de commande (26) sont disposés respectivement aux extrémités d'un levier à deux bras qui peut pivoter autour d'un axe (100) perpendiculaire à l'axe longitudinal (13) du toc d'entraînement (10).

13. Dispositif de verrouillage selon l'une des revendications 1 à 10, **caractérisé en ce que** l'élément d'arrêt (24) est positionné dans le sens radial, de façon à pouvoir se déplacer vers l'extérieur.
